# DEMANDE DE BREVET EUROPEEN

(11) **EP 1 092 615 A1**
(43) Date de publication de la demande: **18.04.2001**
(21) Numéro de dépôt: 00390016.4
(22) Date de dépôt: 16.10.2000
(51) Int. Cl.: B62H 5/20, B62H 3/00, B62H 5/00

(54) **Dispositif de surveillance d'objets parques, integrant des moyens antivols**

(30) Priorité: 14.10.1999 FR 9912833
(71) Demandeur: Bicypark S.A., 31683 Labege (FR)
(72) Inventeur: Camerin, Joseph, 31650 Saint Orens de Gameville (FR); Perosa, Patrick, 47250 Argenton (FR); Vollaire, Pierre, 05000 Gap (FR)
(74) Mandataire: Ravina, Bernard

(57) **Abrégé**

Le dispositif de surveillance d'objets individuels tels des véhicules (5) en stationnement dans un parc (1), comprend au moins un boîtier de verrouillage (7) solidarisé à un élément fixe (2) du parc et comprenant un câble externe (8), destiné à être engagé au travers de l'un au moins des éléments du véhicule (5). Une des extrémités de ce câble est liée de manière indémontable au corps du boîtier (7) et l'autre est pourvue d'un embout de verrouillage (9) prévu pour être engagé dans un alésage (10) du corps du boîtier pour y être immobilisé par un mécanisme de verrouillage (11) commandé par une unité de contrôle et de commande (12) installée à distance. Le dispositif de surveillance est de plus équipé d'un moyen de lecture (33) des données inscrites dans un élément d'identification (30) du véhicule (5), ce moyen étant connecté à l'unité de contrôle et de commande (12).

## Description

La présente invention a pour objet un dispositif de surveillance d'un ou plusieurs objets individuels tels des véhicules à deux roues (bicyclettes, vélomoteurs motocyclettes) en stationnement dans un parc unitaire ou collectif et solidarisés individuellement à un élément fixe de ce dernier par des moyens antivols, le parc de stationnement pouvant être du type de celui objet de la demande de brevet français déposée ce même jour au nom de la demanderesse.

On connaît de l'état de la technique un parc de stationnement avec dispositifs de cadenassage à câbles destinés à solidariser individuellement des véhicules tels des engins à deux roues à une poutre transversale portée au-dessus du sol par un piétement. Ces moyens de cadenassage sont constitués par des câbles en acier gainé, formant chacun une boucle d'extrémité dans laquelle l'utilisateur engage son propre dispositif antivol après avoir éventuellement engagé le câble au travers de l'une ou des deux roues et/ou du cadre du cycle.

Avec ce type de configuration, à moins d'adopter des moyens de vidéo surveillance coûteux en soi et souvent la proie d'actes de dégradation, il n'est possible d'assurer à distance la surveillance des véhicules en stationnement et détecter instantanément une tentative d'effraction. De plus un mauvais cadenassage du véhicule ne pourra être signalé. Par ailleurs ce type de parc de stationnement ne peut être utilisé pour la gestion en temps réel d'un parc de véhicule destiné au prêt ou à la location par exemple.

La présente invention à pour objet de pallier les inconvénients précédemment cités.

A cet effet le dispositif de surveillance selon l'invention, d'objets individuels tels des véhicules en stationnement dans un parc, se caractérise essentiellement en ce qu'il comprend au moins un boîtier de verrouillage solidarisé à un élément fixe du parc et comprenant un câble externe, d'immobilisation du véhicule destiné à être engagé au travers de l'un au moins des éléments du véhicule, dont une des extrémités est liée de manière indémontable au corps du boîtier et dont l'autre extrémité est pourvue d'un embout de verrouillage prévu pour être engagé dans un alésage du corps du boîtier pour y être immobilisé par un mécanisme de verrouillage monté dans le corps du boîtier et commandé électriquement dans le sens de l'immobilisation de l'embout de verrouillage dans le corps de boîtier ou de sa libération, par une unité de contrôle et de commande disposée à distance du parc, ledit dispositif de surveillance étant de plus équipé d'un moyen de lecture des données inscrites dans un élément d'identification installé sur le véhicule, ledit dispositif de lecture étant connecté électriquement à l'unité de contrôle et de commande étant destiné à venir contre l'élément d'identification ou à faible distance de ce dernier

Après avoir engagé le câble externe par exemple dans la roue avant de son cycle l'utilisateur engage l'embout de verrouillage dans l'alésage. Le verrouillage ne sera pas opéré tant que le dispositif de lecture ne sera pas apte à lire les données inscrites sur l'élément d'identification, l'utilisateur doit alors amener le moyen de lecture au contact ou à proximité immédiate de l'élément d'identification que comporte le véhicule L'unité de contrôle et de commande est apte alors à affecter à l'emplacement choisi par l'utilisateur le code d'identification du véhicule et à commander le verrouillage de l'embout.

Le retrait du véhicule ne peut être opéré qu'après avoir identifié clairement l'utilisateur. Ainsi sont prévus, selon un autre aspect de l'invention, un lecteur de carte d'identification installé à proximité du parc et connecté à l'unité de contrôle et de commande et une carte d'identification portée par l'utilisateur contenant des données relatives à l'identification du véhicule et éventuellement d'autres données nécessaires à la gestion commerciale. Pour reprendre le véhicule, l'utilisateur devra présenter la carte d'identification au lecteur de carte. Après lecture de la carte, l'unité de contrôle commandera le déverrouillage de l'embout.

Pour accroître encore la sécurité, le parc de stationnement est avantageusement disposé dans un local à accès protégé comprenant une porte à ouverture commandée par l'unité de contrôle et de commande. Dans ce cas de figure le lecteur de carte d'identification est externe au local et disposé à proximité de la porte à ouverture commandée.

Il est souhaitable que le verrouillage ne puisse pas être opéré dans le cas ou l'embout est soit non engagé dans le boîtier soit insuffisamment engagé. Dans ce but l'invention selon un autre de ses aspects prévoit un capteur interne de détection de l'embout de verrouillage dans l'alésage, ledit capteur étant connecté électriquement à l'unité de contrôle et de commande.

II est préférable que le boîtier de verrouillage puisse être amené à proximité du véhicule et plus particulièrement des éléments au travers desquels doit être engagé le câble. On réduit ainsi la longueur de ce dernier et on facilite la mise en place du câble. Dans ce but, selon un autre aspect de l'invention, le boîtier de verrouillage est lié à l'élément fixe du parc par un élément souple contenant au moins une connexion électrique ou électronique connectée à l'unité de contrôle et de commande d'une part, au mécanisme de verrouillage et au moyen de lecture d'autre part via des interfaces adaptées.

Le moyen de lecture de l'élément d'identification que comporte le véhicule lit en permanence les données inscrites sur cet élément et transmet en permanence le résultat de cette lecture à l'unité de contrôle et de commande. Toute séparation entre le moyen de lecture et l'élément d'identification dû par exemple à une tentative d'effraction, se traduit par la rupture de la transmission du résultat de la lecture ; dans ce cas l'unité centrale de commande et de contrôle génère un signal d'alarme ou de défaut.

La tentative de vol ou de dégradation peut se manifester par le cisaillement de l'élément souple de solidarisation du boîtier de verrouillage à l'élément fixe. Dans ce cas également l'unité de contrôle et de commande ne recevra plus le résultat de la lecture des données inscrites sur l'élément d'identification.

La tentative de vol du véhicule ou de dégradation peut aussi se manifester par le cisaillement du câble externe. Pour signaler cette rupture l'invention, selon un autre de ses aspects, prévoit que le câble externe sera équipé à l'une de ses extrémités d'un élément électronique interne d'une impédance connue formant boucle filaire connecté électriquement à l'unité de contrôle et de commande qui détecte et mesure en permanence l'impédance de la boucle filaire formée. La détection d'un court circuit sera transmise à l'unité de contrôle et de commande via le conducteur électrique équipant l'élément souple.

Selon une autre caractéristique de l'invention, le mécanisme de verrouillage est constitué par un moteur électrique du type de ceux possédant un arbre de sortie sur lequel une puissance motrice est disponible et par un pêne relié cinématiquement à l'arbre de sortie du moteur, ledit pêne, en position d'immobilisation de l'embout de verrouillage dans l'alésage étant engagé dans une forme en creux pratiquée dans ledit embout et en position de libération étant dégagé de ladite forme en creux, ladite forme en creux étant pourvue d'une surface de butée transversale à la direction du mouvement de retrait de l'embout par rapport à l'alésage, en regard de laquelle est positionné le pêne en position de verrouillage, et ledit moteur, par une interface de commande connectée électriquement à l'unité de contrôle et de commande, étant commandé dans le sens du verrouillage et dans le sens du déverrouillage par ladite unité de contrôle et de commande.

D'autres avantages et caractéristiques de l'invention apparaîtront à la lecture de la description d'une forme préférée de réalisation, donnée à tire d'exemple non limitatif en se référant aux dessins annexés en lesquels
- la figure 1 montre un parc équipé du dispositif de surveillance conforme à l'invention,

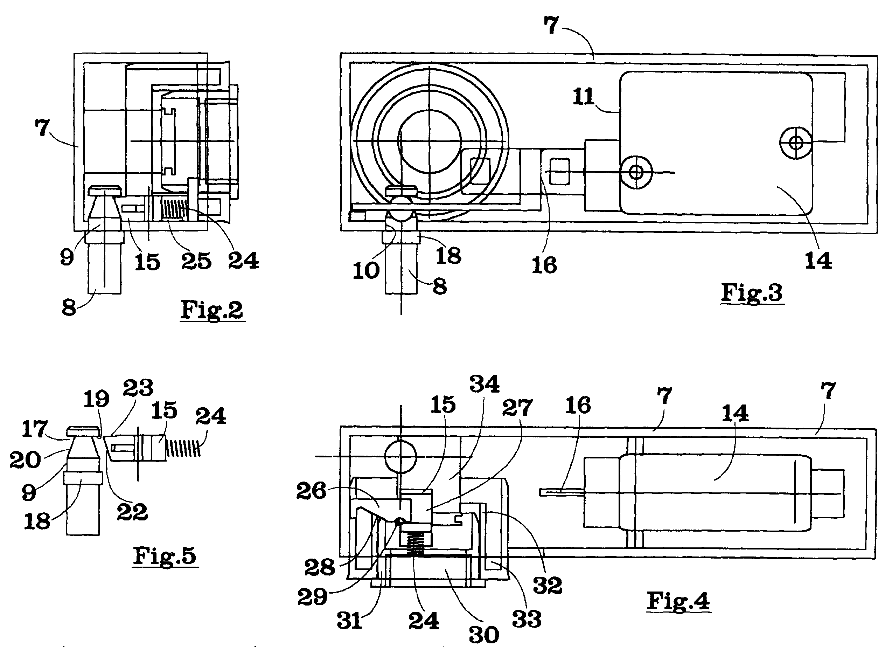

- la figure 2 est une vue en coupe transversale d'un boîtier de verrouillage selon l'invention,
- la figure 3 est une vue en coupe de dessus du boîtier de verrouillage,
- la figure 4 est une vue en coupe de face du boîtier de verrouillage,
- la figure 5 est une vue de détail du pêne et de l'embout de verrouillage.

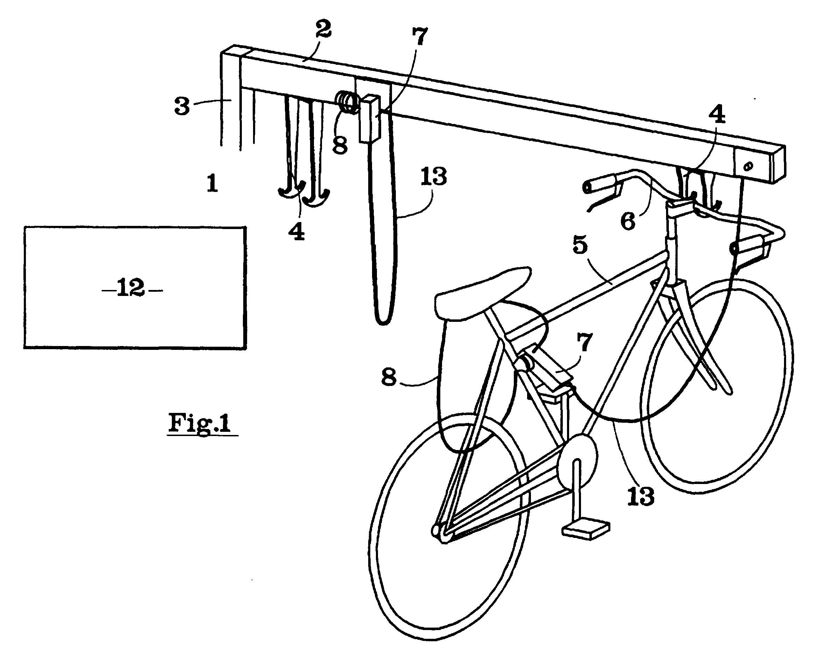

En figure 1 est représenté un parc de stationnement de véhicules à deux roues, par exemple des bicyclettes, associé à un dispositif de surveillance selon l'invention. Le parc de stationnement 1 est constitué par une poutre transversale 2 constituant élément fixe, portée rigidement au-dessus du sol par deux montants d'extrémité 3 fermement ancrés dans te sol ou sur un mur. A la poutre 2 sont fixés à écartement constant les uns des autres, des moyens de suspension 4 des bicyclettes 5 par leurs guidons 6. Ces moyens se présentent par exemple sous la forme de paires de crochets.

Le dispositif de surveillance comprend plusieurs boîtiers de verrouillage 7 associés respectivement aux moyens de suspension 4. Chaque boîtier de verrouillage 7 comprend un corps de boîtier de forme parallélépipédique, par exemple, définissant une enceinte interne également parallélépipédique et constitué par l'assemblage de deux parois latérales à quatre parois longitudinales. Chaque boîtier de verrouillage 7 est lié à l'élément fixe que constitue la poutre transversale 2 par un élément souple 13 constitué par exemple par un câble métallique sous gaine d'une longueur de un à deux mètres et d'une section suffisante pour opposer une bonne résistance à la traction et au cisaillement.

Le boîtier de verrouillage comprend un câble externe 8 en acier sous gaine, fixé par l'une de ses extrémités de manière indémontable à l'une des parois latérales du corps du boîtier. L'autre extrémité du câble est pourvue d'un embout de verrouillage 9 cylindrique prévu pour être engagé par mouvement rectiligne dans un alésage 10 cylindrique du corps du boîtier et pénétrer dans ce dernier pour y être immobilisé par un mécanisme de verrouillage 11 monté en fixation dans l'enceinte que définit le corps du boîtier commandé électriquement dans le sens de l'immobilisation de l'embout de verrouillage dans le corps de boîtier ou de sa libération, par une unité de contrôle et de commande 12 disposée à distance du parc dans un local approprié.

Comme ou peut le voir sur les figures jointes l'alésage 10 est formé par un perçage traversant pratiqué dans l'une des parois longitudinales du corps du boîtier de verrouillage.

Le câble 8 est de préférence conformé en hélice et forme, en l'absence de sollicitations extérieures de traction ou de retenue sur l'embout de verrouillage plusieurs spires jointives. On obtient ainsi une réserve de longueur suffisante sous un volume étroit. Par simple traction sur l'embout 9 il est aisé de déployer le câble 8 en vue de l'engager au travers des éléments à protéger.

Pour immobiliser la bicyclette 5 par rapport au parc, l'utilisateur engage le câble 8 par exemple au travers de la roue avant et au travers du cadre et ensuite engage l'embout de verrouillage 9 dans l'alésage 10. L'unité centrale et de commande 12 active alors le mécanisme de verrouillage 11 dans le sens du blocage de l'embout de verrouillage 9 par rapport à l'alésage 10.

Ce mécanisme de verrouillage 11 est constitué par un moteur électrique 14 par exemple un vérin et par un pêne 15 relié cinématiquement à l'arbre de sortie 16 du moteur 14. Le moteur électrique 14, via une interface de commande adaptée, est connecté électriquement à l'unité de contrôle et de commande, pour être commandé par cette unité de contrôle et de commande 12 dans le sens du verrouillage et dans le sens du déverrouillage. La liaison électrique entre l'unité de contrôle et de commande 12 et l'interface associée au moteur électrique 14 peut être établie par l'élément souple 13 ou bien, selon la forme préférée de réalisation, par au moins un conducteur électrique sous gaine noyé dans l'élément souple 13.

La source d'énergie électrique nécessaire à l'alimentation du moteur électrique 14 pourra être soit disposée dans le boîtier ou bien à distance du parc à proximité par exemple de l'unité de contrôle et de commande 12. La source d'énergie électrique pourra être commandée et contrôlée par cette unité 12. Le circuit électrique d'alimentation du moteur électrique comprendra au moins deux conducteurs électriques noyés dans l'élément souple 13.

Préférentiellement le pêne 15, en position d'immobilisation de l'embout de verrouillage 9 dans l'alésage 10, est engagée dans une forme en creux 17 pratiquée dans ledit embout 9 et en position de libération est dégagé de cette forme en creux. De préférence la forme en creux est constituée par une gorge continue. En raison de cette disposition aucun positionnement angulaire préalable de l'embout 9 dans l'alésage ne sera pas nécessaire ce qui facilitera l'opération de verrouillage. Il reste cependant nécessaire de positionner longitudinalement l'embout dans l'alésage de façon que la forme en creux soit disposée, avant verrouillage, sur la trajectoire du pêne 15. Pour cette raison l'embout de verrouillage 9 est équipé d'un épaulement d'arrêt 18 destiné à venir en butée contre la bordure périphérique de l'embouchure de l'alésage 10 sur la paroi longitudinale correspondante ce qui assure le positionnement longitudinal. Ce positionnement longitudinal pourra être assuré par d'autres moyens de butée, internes au boîtier disposés dans l'axe de l'alésage 10.

La forme en creux 17 est pourvue d'une surface de butée 19 transversale à la direction du mouvement de retrait de l'embout par rapport à l'alésage, en regard de laquelle est positionné le pêne 15 en position de verrouillage. Cette surface de butée 19, s'oppose donc lorsque le pêne 15 est en position de verrouillage au retrait de l'embout 9. Il y a lieu de noter que la distance entre cette surface de butée et l'épaulement d'arrêt ne permet pas un mouvement axial suffisant pour écarter de manière significative l'épaulement d'arrêt de l'embouchure de l'alésage. Ainsi l'épaulement d'arrêt outre sa fonction de limitation de la pénétration de l'embout dans l'alésage, constitue, en masquant l'embouchure de l'alésage, un écran efficace à la pénétration dans le boîtier, de tiges et autres instruments propices à enclencher le déverrouillage du pêne.

Préférentiellement la surface de butée 19 est perpendiculaire à la direction du mouvement de l'embout d'introduction et de retrait de l'embout de verrouillage 9 dans l'alésage 10.

Selon la forme préférée de réalisation la gorge continue 17 est délimitée par un fond tronc conique 20 et par une face latérale en couronne circulaire se développant de manière perpendiculaire à l'axe géométrique longitudinal de symétrie de l'embout cylindrique, ladite face latérale constituant la surface de butée 19. Selon cette forme de réalisation le pêne 15 présente une surface en biseau 22, d'extrémité, par laquelle, en position de verrouillage, il vient contre le fond de la rainure 17 et une surface latérale de butée 23 par laquelle il vient en regard de la surface latérale de butée 19 que présente la gorge 17. La surface latérale de butée 19, au moins en position de verrouillage du pêne est parallèle à la surface latérale de butée 23. De plus le mouvement du pêne dans le sens de son introduction dans la forme en creux ou de son retrait est linéaire et perpendiculaire à la direction du mouvement d'introduction de l'embout 9 dans l'alésage 10. Ainsi la composante radiale de l'effort exercé par la surface latérale de butée 19 de l'embout 9 sur la surface latérale de butée 23 du pêne 15, lorsque l'embout est sollicité dans le sens du retrait, sera nulle. En d'autres termes quelle que soit l'intensité de l'effort exercé sur l'embout dans le sens de son extraction aucune action significative dans le sens du déverrouillage ne sera générée sur le pêne par cet effort. On réalise ainsi un système particulièrement fiable apte à résister à l'effraction.

Préférentiellement le pêne 15 est sollicité vers la position de verrouillage par un organe élastique 24 et est monté coulissant dans ou sur un élément de guidage 25. Ces caractéristiques techniques, en combinaison avec le biseau 22 que présente le pêne 15 autorisent l'introduction dans l'alésage 10 de l'embout 9 et le verrouillage de ce dernier alors que le pêne 15 est déjà en position de verrouillage En effet lors de l'introduction, l'embout de verrouillage 9 agit en poussée sur le biseau 22 du pêne 15. Le pêne sous l'effet de la composante radiale de l'effort de poussée se trouve alors mobilisé dans ou sur son élément de guidage 25 et ce à l'encontre de l'action exercée par l'organe élastique 24 Le mouvement d'introduction se poursuivant, la forme en creux 17 parvient en regard du pêne, l'action exercée par l'embout 9 disparaît alors. Le pêne 15 peut donc être introduit dans la forme en creux 17 sous l'effet de la poussée exercée par l'organe élastique 24 et assurer le verrouillage.

Selon la forme préférée de réalisation, le mouvement de l'arbre de sortie 16 du moteur électrique 14 est linéaire et de direction perpendiculaire à la direction du mouvement du pêne 15 et le pêne 15 est lié cinématiquement audit arbre par une came 26 fixée rigidement audit arbre de sortie.
Une telle disposition est propice notamment à diminuer l'encombrement du mécanisme de verrouillage et par voie de conséquence du corps du boîtier. Mais dans la mesure ou l'encombrement n'est pas un facteur déterminant, pourra être prévue une disposition selon laquelle le mouvement de l'arbre de sortie du moteur et le mouvement du pêne sont colinéaire. De même on pourra prévoir un moteur dont l'arbre de sortie est mû selon un mouvement pendulaire, le mouvement d'introduction et de retrait du pêne de la forme en creux 17 étant dans ce cas de figure également pendulaire.

La came 26, de forme plate est engagée dans une fente traversante 27 pratiquée dans le pêne 15 et comporte une surface de came 28, oblique par rapport à la direction de son mouvement de translation. Le pêne 15, par une goupille 29 transversale à la fente 27 est sollicité vers la surface de came 28 par l'action de l'organe élastique 25. Selon cette configuration le pêne est engagé en coulissement dans l'élément de guidage 25 et ce dernier est constitué par un rail en U. Ce rail de guidage 25 est monté en fixation dans le corps du boîtier. La longueur de la fente mesurée dans la direction du mouvement du pêne est bien plus importante que la largeur de la came de façon que le pêne lorsqu'il est selon la position de verrouillage puisse librement coulisser par rapport à la came. En outre la largeur de la fente est supérieure de quelques dixièmes de millimètres à l'épaisseur de la came pour assurer un librement coulissement de la came et du pêne l'un par rapport à l'autre. Le rail de guidage assure le maintien latéral du pêne et la came assure le maintien du pêne dans le rail. Lors du mouvement de l'arbre du moteur vers une position correspondant au déverrouillage du pêne la surface de came 28 vient agir sur la goupille 29 et repousse le pêne vers sa position de déverrouillage.

Il est utile de signaler à l'unité de contrôle et de commande 12 la présence d'un embout dans l'alésage. Pour cette raison est est prévu un capteur de présence d'un type connu, connecté électriquement à l'unité de contrôle et de commande. Ce capteur est activé lorsque l'embout de verrouillage est totalement engagé dans le corps du boîtier. Ce capteur peut être disposé soit dans le boîtier soit dans l'embout de verrouillage. Le circuit électrique de transfert du signal entre l'unité centrale de commande et de contrôle 12 comprend notamment au moins deux conducteurs électriques noyés dans l'élément souple 13.

Le dispositif de surveillance est équipé d'un moyen de lecture 33 des données inscrites, de manière infalsifiable dans un élément d'identification 30 installé sur le véhicule à protéger, ce moyen de lecture est connecté électriquement à l'unité de contrôle et de commande 12. Le circuit électrique de connexion du moyen de lecture à l'unité de contrôle et de commande 12 comprend au moins un conducteur électrique noyé dans l'élément souple 13.

Selon la forme préférée de réalisation, l'élément d'identification 30 est constitué par un composant électronique mémoire adressable par couplage radiofréquence. Cet élément d'identification possède un numéro de série unique ainsi qu'une zone mémoire protégée ou non en lecture et écriture contenant des informations d'identification et de gestion du véhicule auquel elle est associée. Le moyen de lecture 33 est apte à assurer une lecture sans contact et l'élément d'identification 30 est monté dans un corps de protection 31, cylindrique, transparent aux ondes hertziennes fixé de manière indémontable ou difficilement démontable, sur le véhicule à protéger. Ainsi l'élément d'identification ne peut plus être usé par oxydation et frottement avec le moyen de lecture, de plus cet élément se trouve protégé des chocs et dans une certaine mesure de la dégradation.
L'une des parois du corps du boîtier est équipée d'un perçage traversant dans lequel est engagé un fourreau cylindrique 32, ce fourreau étant destiné à recevoir le corps cylindrique de protection. Préférentiellement le moyen de lecture 33 des données inscrites dans l'élément d'identification est disposé autour du logement que détermine le fourreau. Pour recevoir ce moyen de lecture constitué par exemple par une antenne, le fourreau 32 est dotée d'un logement annulaire. Avantageusement ce logement forme une collerette d'appui contre la bordure périphérique de l'embouchure du perçage sur la paroi longitudinale correspondante. Cette collerette à donc pour but de positionner axialement le fourreau dans le perçage traversant et également de masquer l'embouchure du perçage.

Pour maintenir le moyen de lecture 33 en relation avec l'élément d'identification, il est nécessaire de bloquer axialement le corps de protection cylindrique 31 dans le fourreau 32. Il est nécessaire également que cette liaison soit amovible de façon à permettre le retrait du boîtier de verrouillage. Pour cette raison, selon une première forme de réalisation le corps de protection comporte en extrémité, noyée dans la masse, une pastille en matériau ferromagnétique et un aimant 34 est disposé en fixation dans le fourreau 32 ou dans le corps du boîtier dans l'axe du dit fourreau. Une fixation par clips du corps de protection 31 dans le fourreau 32 pourra aussi être envisagée. Outre le fait de maintenir le moyen de lecture 33 en relation de lecture des données inscrites dans l'élément d'identification, cette disposition assure le maintien du boîtier de protection sur le véhicule à protéger. Le retrait du boîtier interrompt la lecture des données donc la transmission du résultat de cette lecture et si ce retrait n'est pas autorisé par l'unité de contrôle et de commande 12 un signal d'alarme qui peut être sonore sera émis. La rupture du lien souple 13 interrompra aussi la transmission du résultat de la lecture et provoquera l'émission d'un signal d'alarme.

Un signal d'alarme doit être émis aussi en cas de rupture du câble 8. Pour cette raison ce dernier est équipé d'au moins un conducteur électrique interne formant une boucle, connecté électriquement à un élément électronique d'un type connu et présentant une impédance invariable de valeur connue Cet élément électronique est connecté électriquement à l'unité de contrôle et de commande 12 par l'intermédiaire notamment du ou des conducteurs équipant le lien souple 13.L'unité 12 détecte et mesure en permanence l'impédance de la boucle filaire formée par l'élément électronique et le conducteur et est apte à engendrer un signal d'alarme si une variation d'impédance est détectée, cette variation pouvant résulter du sectionnement du câble externe 8.
Avantageusement, l'élément électronique est logé dans l'embout de verrouillage.

Le parc de stationnement peut être disposé avantageusement dans local à accès protégé et contrôlé par l'unité de contrôle et de commande. A proximité du local est installé un lecteur de carte d'identification connecté à l'unité de contrôle et de commande. Ce lecteur est destiné à la lecture et à la transmission à l'unité de commande et de contrôle 12 d'informations inscrites sur une carte d'identification portée par l'utilisateur contenant des données relatives à l'identification de l'objet parqué et éventuellement d'autres données nécessaires à la gestion commerciale. Pour reprendre le véhicule, l'utilisateur devra introduire la carte d'identification dans le lecteur de carte. Après lecture de la carte et vérification de la validité de données inscrites sur cette dernière, l'unité de contrôle commandera d'abord l'ouverture de la porte d'accès au local et le déverrouillage de l'embout 9. Si les données inscrites sur la carte sont invalides ou si le lecteur ne peut lire ces données ou bien si le résultat de cette lecture ne peut être transmis ou est imparfaitement transmis à l'unité de contrôle et de commande cette dernière ne pourra commander l'ouverture de la porte d'accès au local et le déverrouillage de l'embout du boîtier de verrouillage correspondant.

L'unité de contrôle et de commande possède les bases de données relatives au bon fonctionnement du parc de stationnement. Ces bases de données contiennent les coûts, les mouvements d'entrées et sorties, les alarmes, les défauts techniques et autres informations nécessaires à la bonne gestion. La liaison de l'unité de contrôle et de commande avec les éléments du boîtier de verrouillage et les éléments du parc de stationnement pourra être effectuée par un bus de terrain filaire ou par liaison radiofréquence.

L'unité de contrôle et de commande doit pouvoir surveiller et gérer plusieurs boîtier de verrouillage. Dans ce but les différents boîtiers de verrouillage sont connectés électriquement à au moins un concentrateur lui-même connecté électriquement soit par liaison filaire soit par liaison radio fréquence à l'unité de contrôle et de commande. Ce concentrateur connu en soi a pour fonction d'assurer le regroupement et la communication des boîtiers de verrouillage sur le réseau de terrain. Il garantit également la surveillance permanente, le bon fonctionnement et l'automatisme des boîtiers de verrouillage.

Enfin le dispositif de surveillance sera équipé d'un terminal de rechargement et de consultations. Ce terminal permet la gestion des clients (inscriptions, droits, réservations, abonnement, crédits et autres) ainsi que la gestion des bases de données et la surveillance de l'installation. La liaison avec l'unité de contrôle s'effectuera par voie hertzienne ou par voie filaire. Il y a lieu de noter que ce terminal de rechargement et de consultations peut être associé à plusieurs dispositifs selon l'invention.

La présente invention ne s'applique pas exclusivement à la surveillance de bicyclettes mais au contraire trouve son application dans la surveillance de tous types de véhicules et plus généralement dans la surveillance de tous objets individuels à protéger du vol, parqués dans un emplacement réservé ou mis en consigne Enfin les données recueillies par l'unité de contrôle et de commande 12 peuvent être utilisées pour la gestion de l'utilisation de ces objets. Ainsi elle s'applique à tous types d'objets destinés à la location et/ou au prêt.

Il va de soi que la présente invention peut recevoir tous aménagements et variantes du domaine des équivalents techniques sans pour autant sortir du cadre définit par les revendications.

## Revendications

1. Dispositif de surveillance d'objets individuels tels des véhicules (5) en stationnement dans un parc (1) individuel ou collectif, caractérisé en ce qu'il comprend au moins un boîtier de verrouillage (7) solidarisé à un élément fixe (2) du parc et comprenant un câble externe (8), d'immobilisation du véhicule (5 destiné à être engagé au travers de l'un au moins des éléments du véhicule (5), dont une des extrémités est liée de manière indémontable au corps du boîtier (7) et dont l'autre extrémité est pourvue d'un embout de verrouillage (9 prévu pour être engagé dans un alésage (10) du corps du boîtier pour y être immobilisé par un mécanisme de verrouillage (11) monté dans le corps du boîtier et commandé électriquement dans le sens de l'immobilisation de l'embout de verrouillage dans le corps de boîtier ou de sa libération, par une unité de contrôle et de commande (12) disposée à distance du parc (1), ledit dispositif de surveillance étant de plus équipé d'un moyen de lecture (33) des données inscrites dans un élément d'identification (30) installé sur le véhicule (5), ledit moyen de lecture (33) étant connecté électriquement à l'unité de contrôle et de commande (12).

2. Dispositif de surveillance selon la revendication 1, caractérisé en ce que le boîtier de verrouillage (7) est lié à l'élément fixe du parc par un élément souple (13) contenant au moins un conducteur électrique connecté à l'unité de contrôle et de commande (12) d'une part, au mécanisme de verrouillage (11) et au moyen de lecture (33) d'autre part via des interfaces adaptées.

3. Dispositif de surveillance selon la revendication 1 ou la revendication 2 caractérisé par un capteur de détection de l'embout de verrouillage (9) dans l'alésage (10), ledit capteur étant connecté électriquement à l'unité de contrôle et de commande (12).

4. Dispositif de surveillance selon l'une quelconque des revendications précédentes, caractérisé en ce que le câble externe (8) est équipé d'un conducteur électrique interne formant boucle filaire connecté électriquement à un détecteur de court circuit lui-même connecté électriquement à l'unité de contrôle et de commande

5. Dispositif de surveillance selon l'une quelconque des revendications précédentes, caractérisé en ce que le mécanisme de verrouillage (11) est constitué par un moteur électrique (14) du type de ceux possédant un arbre de sortie (16) sur lequel une puissance motrice est disponible et par un pêne (15) relié cinématiquement à l'arbre de sortie (16) du moteur (15), ledit pêne (16), en position d'immobilisation de l'embout de verrouillage (9) dans l'alésage (10) étant engagé dans une forme en creux (17) pratiquée dans ledit embout (9) et en position de libération étant dégagé de ladite forme en creux (17), ladite forme en creux (17) étant pourvue d'une surface de butée (19) transversale à la direction du mouvement de retrait de l'embout (9) par rapport à l'alésage (10), en regard de laquelle est positionné le pêne (15) en position de verrouillage, et ledit moteur (14), par une interface de commande connectée électriquement à l'unité de contrôle et de commande (12), étant commandé dans le sens du verrouillage et dans le sens du déverrouillage par ladite unité (12).

6. Dispositif de surveillance selon la revendication 5, caracténsé en ce que la forme en creux (17) de l'embout de verrouillage (9) est constituée par une gorge continue.

7. Dispositif de surveillance selon la revendication 6, caractérisé en ce que la gorge continue est délimitée par un fond tronc conique (20) et par une face latérale en couronne circulaire (21) se développant de manière perpendiculaire à l'axe géométrique longitudinal de symétrie de l'embout cylindrique (9), ladite face latérale (21) constituant la surface de butée.

8. Dispositif de surveillance selon la revendication 7, caractérisé en ce que le pêne (15) présente une surface en biseau (22) par laquelle en position de verrouillage il vient contre le fond (20) de la gorge (17) et une surface latérale de butée (23) par laquelle il vient en regard de la surface latérale de butée (21) que présente la gorge (17).

9. Dispositif de surveillance selon l'une quelconque des revendications 5 à 8, caractérisé en ce que le mouvement du pêne (15) dans le sens de son introduction dans la forme en creux (17) ou de son retrait est linéaire et perpendiculaire à la direction du mouvement d'introduction de l'embout (9) dans l'alésage (10).

10. Dispositif de surveillance selon l'une quelconque des revendications 5 à 9 caractérisé en ce que le pêne (15) est sollicité vers la position de verrouillage par un organe élastique (24) et que le pêne (15) est monté coulissant dans ou sur un élément de guidage (25).

11. Dispositif de surveillance selon l'une quelconque des revendications 5 à 10 caractérisé en ce que le mouvement de l'arbre de sortie (16) du moteur électrique (14) est linéaire et de direction perpendiculaire à la direction du mouvement du pêne (15) et que le pêne (15) est lié cinématiquement audit arbre (16) par une came (26) fixée rigidement audit arbre de sortie (16).

12. Dispositif selon la revendication 11, caractérisé en ce que la came (26) de forme plate est engagée dans une fente traversante (27) pratiquée dans le pêne (15) et comporte une surface de came (28), oblique par rapport à la direction de son mouvement de translation, le pêne (15) par une goupille (29) transversale à la fente (27) étant sollicité vers la surface de came (28) par l'action d'un organe élastique (24), ledit pêne (15) étant engagé en coulissement dans un rail de guidage (25) monté en fixation dans le corps du boîtier de verrouillage (7).

13. Dispositif de surveillance selon l'une quelconque des revendications précédentes, caractérisé en ce que l'embout (9) est équipé d'un épaulement d'arrêt (18) venant contre la bordure périphérique de l'embouchure de l'alésage (10) afin de limiter le mouvement d'engagement de l'embout de verrouillage (9) dans le corps du boîtier.

14. Dispositif de surveillance selon l'une quelconque des revendications précédentes, caractérisé en ce que l'élément d'identification (30) est monté dans un corps de protection cylindrique (31) transparent aux ondes hertziennes et que l'une des parois du corps du boîtier (7) est équipée d'un perçage traversant dans lequel est engagé et bloqué un fourreau cylindrique (32), ledit fourreau (32) étant destiné à recevoir le corps de protection cylindrique de l'élément d'identification.

15. Dispositif de surveillance selon la revendication 14, caractérisé en ce que le moyen de lecture (33) des données inscrites dans l'élément d'identification (30) est disposé autour du logement que détermine le fourreau (33).

16. Dispositif de surveillance selon la revendication 14 ou la revendication 15, caractérisé en ce que le fourreau (32) est doté d'un logement annulaire recevant le moyen de lecture (33), ce logement annulaire formant collerette d'appui contre la face externe de la paroi correspondante du boîtier de verrouillage (7).

17. Dispositif de surveillance selon l'une quelconque des revendications 12 à 16, caractérisé en ce que le boîtier de verrouillage (7) est maintenu sur le corps de protection par un aimant.

18. Dispositif de verrouillage selon l'une quelconque des revendications 1 à 17, caractérisé en ce que le boîtier de verrouillage (7) est maintenu sur le corps de protection par un clips.

19. Dispositif de surveillance selon l'une quelconque des revendications précédentes, caractérisé en ce par un lecteur de carte d'identification installé à proximité du parc et connecté à l'unité de contrôle et de commande, ce dit lecteur étant destiné à la lecture et à la transmission à l'unité de commande et de contrôle (12) d'informations inscrites sur une carte d'identification portée par l'utilisateur contenant des données relatives à l'identification de l'objet parqué.

20. Dispositif de surveillance selon la revendication 20, caractérisé en ce le pare de stationnement est disposé dans un local à accès protégé comprenant une porte à ouverture commandée par l'unité de contrôle et de commande 12.
